# EUROPEAN PATENT SPECIFICATION

(11) **EP 1 475 872 B1**
(45) Date of publication and mention of the grant of the patent: **15.04.2009**
(21) Application number: 03739509.2
(22) Date of filing: 14.02.2003
(51) Int. Cl.: H02G 9/06, E02D 29/12

(54) **ARTICULATED DUCT FOR THE HOUSING OF UNDEGROUND CONDUCTORS**
GELENKIGER KANAL, ZUM UNTERBRINGEN VON UNTERGRUNDKABELN
CONDUIT ARTICULE SERVANT A CONTENIR DES CABLES SOUTERRAINS

(30) Priority: 14.02.2002 ES 200200358
(43) Date of publication of application: 10.11.2004
(73) Proprietor: Garcia Ballesteros, Angel, 29016 Malaga (ES)
(72) Inventor: Garcia Ballesteros, Angel, 29016 Malaga (ES)
(74) Representative: Garcia-Cabrerizo y del Santo, Pedro Maria
(86) International application number: PCT/ES2003/000080
(87) International publication number: WO 2003/069750

(56) References cited:
- WO-A-01/24336
- WO-A-94/01907
- DE-U- 9 017 373
- GB-A- 2 226 711

## Description

The present invention refers to a duct formed by the articulated coupling of a series of modules, capable of housing installations of different types of services in more than one compartment for use in the electrical, telephonic, security underground canalizations as well as in telecommunications and energy industries in general.

Currently, and as a result of society's needs, cities are undergoing the installation of new telephony, fibre optics etc. These installations are at their laying stage with the problem that pavements are already occupied by old water, gas, electricity, drainage installations etc. Consequently, new installations are confronted by numerous obstacles, both vertical and horizontal ones.

Traditionally, canalizations of services have been carried out in three different ways:
- Duct formed by various tubes, more or less rigid, of varying diameters and materials, laid in the same trench. On occasions these are interspersed with suitable separators. Depending on their thicknesses, the tubes may be completely rigid in which case the duct is formed by joining successive pieces together, or may be flexible in which case they are supplied in a reel and allow a certain curvature radius. Embodiment in corrugated tube form enables changes of direction although the passing of service cables through its interior is more difficult because of this.
- Solid square or rectangular duct, of prefabricated concrete offering more than just one circular inner channel within its interior to house cables.
- Hollow square or rectangular duct, of prefabricated concrete or fibre cement with a cover seal (WO-A-94/01907).

The first lot of these offer low price and weight advantages, but as a disadvantage have problems negotiating obstacles, although this is not the case with tubes with less thick walls and a corrugated structure.

With regard to prefabricated ducts, their main advantage is the elimination of concreting at the construction site, and in the case of rectangular ducts with covers, the offering of greater capacity and the possibility of laying the conductors vertically from the surface instead of guiding them through the use of successive prefabricated blocks with the friction this entails. On the other hand, there are major drawbacks such as the high cost of transport and handling because of their weight, as well as the total inability of these ducts to negotiate obstacles.

Consequently, one of the objectives of this invention a defined by the claims is to offer a practical, capacious duct that can be compartmentalised and which, because of its extremely robust nature as a result of its assembly from short-length, light, rigid modules, is capable of negotiating obstacles.

The objective of this invention is achieved by the coupling, in order to form a longitudinal duct, of a plurality of identical modules connected to one another by a ball and socket joint. Each one of these modules is formed by a base and a cover with a central body and a spherical sector at either end so that when the base and cover are joined together, each one of the modules will have a hollow, closed, central body designed to house the service conductors, finished off at either end by spherical surface paths of slightly varying diameters, so that the smaller spherical surface can be joined to the interior of the larger spherical path of the adjacent module in order to form a ball and socket joint enabling flexibility in the alignment of the successive modules, while at the same time staying coupled to one another longitudinally.

In the context of the present document the terms "larger/smaller" with the sense of "major/minor", as adjectives (no comparatives) will be used.

It can be understood that the division of the module into a base and a cover, each with their corresponding spherical sectors working together to form the smaller spherical surface and the larger spherical surface, has as its objective the assembly and coupling of the modules, a process which would be impossible if the spherical surfaces were made into just one piece.

The advantages of the above solution are the following:
- Less heavy
- Reduced cost
- Quick execution
- Ease of handling and transport
- Large capacity
- Possibility of compartmentalising the duct
- Very robust and resistant to crushing
- Elimination of tube separators
- Optimum exploitation of trench cross section
- Adaptability to building work plan, being able to modify direction of duct

To complement this description and in order to provide a better understanding of the characteristics of the invention, a detailed description of its practical embodiment is offered based on a set of drawings accompanying this specification which have illustrative rather than limiting characteristics, and illustrate the following:

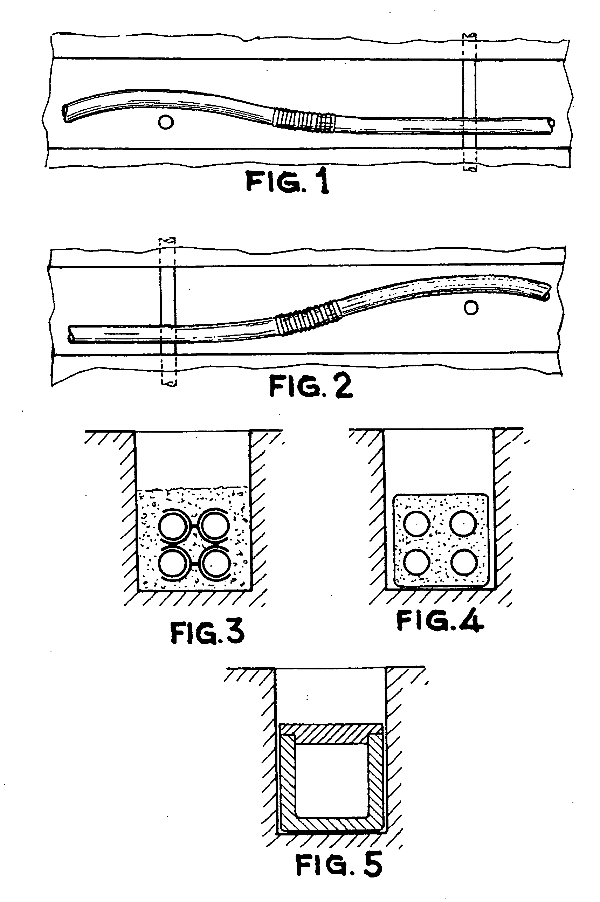

- Figure 1: shows an elevational view of an installation according to the state of the prior art with a flexible or corrugated straight tube, and with a horizontal and a vertical obstacle evident.
- Figure 2: shows a horizontal cross section of the installation in figure 1.
- Figure 3: shows a cross section of an installation in accordance with the prior art, using a plurality of rigid tubes with separators.
- Figure 4: shows a cross section of an installation in accordance with the prior art, using prefabricated concrete equipped with a plurality of circular inner channels.
- Figure 5: shows a cross section of an installation in accordance with the prior art using prefabricated concrete consisting of a "U" cross section and a flat cover.
- Figure 6: shows a cross section of the duct of the invention.
- Figure 7: is identical to figure 6, except that here the base of the duct is equipped with horizontal and vertical partition walls.
- Figure 8: shows an elevational view of the cover that forms a part of the module.
- Figure 9: shows an elevational view of the base forming part of the module.
- Figure 10: shows an elevational view of the base and the cover together to form the module.
- Figure 11: shows a cross section of the ball and socket joint between two adjacent modules.
- Figure 12: shows an elevational view of two adjacent modules indicating a change of direction of horizontal angle A.
- Figure 13: shows a plan view of two adjacent modules indicating a change of direction of vertical angle B

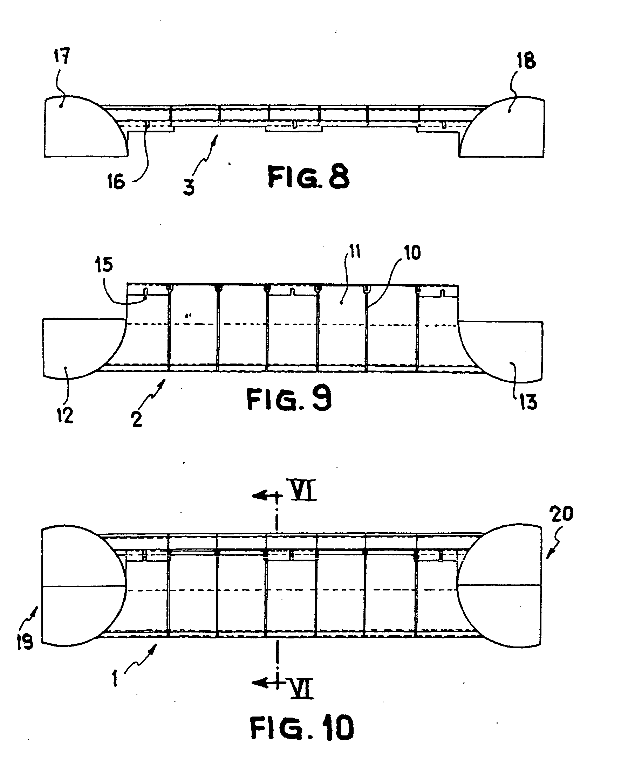

In such figures the numerical references correspond to the following parts and elements:
1. Module
2. Base
3. Cover
4. Bottom
5. Side walls
6. Longitudinal grooves
7. Vertical partition walls
8. Step
9. Horizontal partition
10. Buttresses
11. Central body
12. Larger spherical sector of the base
13. Smaller spherical sector of the base
14. Housing
15. Vertical grooves
16. Studs
17. Larger spherical sector of the cover
18. Smaller spherical sector of the cover
19. Larger spherical surface
20. Smaller spherical surface
   As can be observed in figures 8 to 10, the articulated duct of the invention is formed by a plurality of modules (1), each one comprising a base (2) and a cover (3).

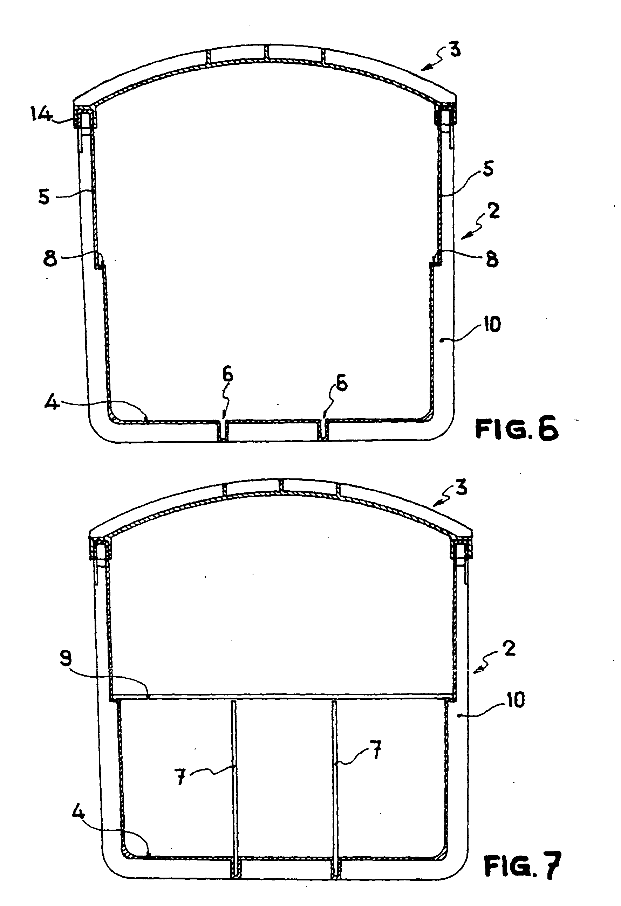

The base (2), in a "U" cross section as shown in figure 6, has a bottom (4) and side walls (5), offering in its bottom (4) a plurality of longitudinal grooves (6) designed to hold vertical partition walls (7) and in the side walls (5), a step (8) designed to support a horizontal partition (9). The bottom (4) and the side walls (5) comprise a central body (11) finished off at both ends by a larger spherical sector of the base (12) and a smaller spherical sector of the base (13) which, vertically, reach up to the centre of the sphere, while, horizontally, go beyond the centre of the aforementioned. See figures 7 and 9.

The cover (3) is conveniently embodied with a curved cross section in order to increase its resistance to crushing, is connected to the base (2) by means of housing (14) in the form of a "C" which encircles the upper edge of the side walls (5) and has at either end of the central body, just like at the base (2), a larger spherical sector of the cover (17) and a smaller spherical sector of the cover (18) which, complementary of the corresponding spherical sectors of the base (12) (13) form, once the base (2) and the cover (3) are joined together, a larger spherical surface (19) and a smaller spherical surface (20) in the module (1). See figures 6 to 10.

Both the base (2) and the cover (3) are made from light, not very thick material, such as a plastic; hence it is a worthwhile equipping them externally with reinforcement buttresses (10).

In order to assure the retention of the cover (3) on the base (2), the latter has a plurality of vertical grooves (15) designed to hold the corresponding studs (16) on the cover (3) forming a press fit, which is widely known in other sectors of the art.

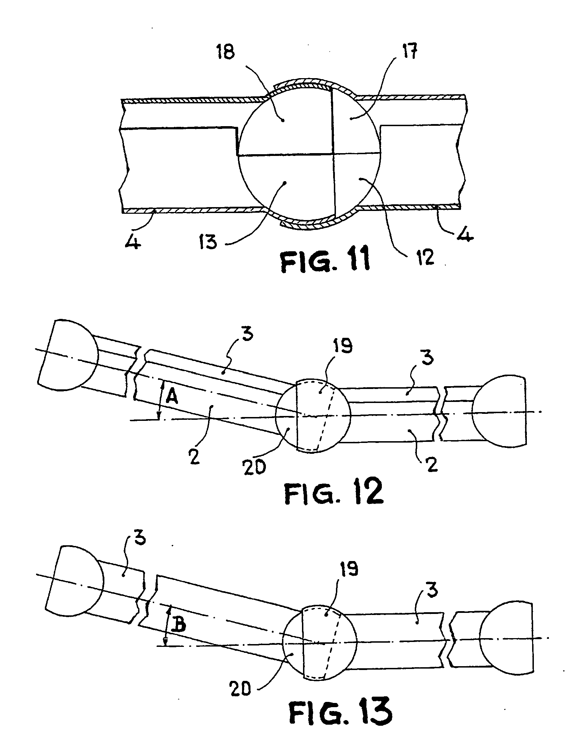

To proceed to the installation of the duct, object of the invention, and once the trench has been excavated, the modules (1) are then arranged by placing one after the other starting with the bases (2) fitting the smaller spherical sector (13) into the interior of the larger spherical sector (12) of the adjacent base (2), proceeding in the same manner with the cover (3) whose smaller spherical sector of the cover (18) must be fitted into the interior of the larger spherical sector of the cover (17) of the adjacent cover (3). In this way, and once the covers (3) have been joined to the bases (2) as a result of the housing and attachment of the studs (16) in the corresponding vertical grooves (15), the successive modules (1) will be coupled to one another staying joined longitudinally but permitting a certain change of direction both vertically (A) and horizontally (B). See figures 11, 12, and 13.

A series of modifications and alternatives which permit the adaptation of the duct of the invention to different usage requirements will be obvious to a person skilled in the art. In particular, if the base 2 and the cover (3) are made from plastic materials, their composition will be principally determined by the manufacturing process used. Likewise, it will be convenient if the duct offers a noticeably rectangular cross section, since this maximises the use of the volume of excavation, although there is nothing to stop the duct having curved surfaces, which improve resistance to crushing. With regard to the reinforcement buttresses (10), these have been shown in a perimetric arrangement, although they will ultimately be determined by the rigidity requirements of the array. As a result, the presence of longitudinal buttresses cannot be ruled out, or in the spherical surfaces either.

## Claims

1. Articulated duct for the housing of underground conductors of the type formed by a plurality of similar modules (1) coupled together, **characterised in that** each module (1) comprises a "U" shape cross section base (2), defined by a bottom (4) and two side walls (5), and a cover (3) which form a holow, closed, central body (11) designed to hold underground conductors, with the base (2) having a larger spherical sector of the base (12) and a smaller spherical sector of the base (13) at either end, and the cover (3) a larger spherical sector of the cover (17) and a smaller spherical sector of the cover (18) at either end so that when the base (2) and the cover (3) are joined together the larger spherical sector of the base and the larger spherical sector of the cover (17) form a larger spherical surface (19) and the smaller sector of the base (13) and the smaller spherical sector of the cover (18) form a smaller spherical surface (20) smaller in diameter than the larger spherical surface (19) in which it is housed to form a ball and socket.

2. Articulated duct for the housing of underground conductors, as claimed in claim 1, **characterised in that** the bottom (4) has longitudinal grooves (6) designed to hold vertical partitions (7) and **in that** the side walls (5) have a step (8) designed to hold a horizontal partition (9).

3. Articulated duct for the housing of underground conductors, as claimed in claim 1, **characterised in that** the module (1) is equipped with retention mechanisms designed to keep the cover (3) attached to the base (2), made up of a plurality of studs (16) in the cover (3) designed to be inserted and remain retained in the corresponding vertical grooves (15) that the base (2) has in its side walls (5).

## Patentansprüche

1. Gelenkiger Kanal zur Aufnahme von unterirdischen Leitungen von der Art, der aus einer Vielzahl von ähnlichen Modulen (1) gebildet wird, welche miteinander gekoppelt sind, **dadurch gekennzeichnet, dass** jedes Modul (1) einen Boden (2) mit einem Querschnitt in Form eines "U" umfasst, welcher von einer Grundfläche (4) und zwei Seitenwänden (6) definiert wird, sowie einen Deckel (3), welche einen hohlen, geschlossenen, zentralen Körper (11) bilden, dazu ausgelegt, unterirdische Leitungen zu tragen, wobei der Boden (2) einen größeren kugelförmigen Sektor des Bodens (12) und einen kleineren kugelförmigen Sektor des Bodens (13) jeweils an jedem Ende besitzt, und der Deckel (3) einen größeren kugelförmigen Sektor des Deckels (17) und einen kleineren kugelförmigen Sektor des Deckels (18) jeweils an jedem Ende besitzt, so dass, wenn der Boden (2) und der Deckel (3) miteinander verbunden werden, der größere kugelförmige Sektor des Bodens und der größere kugelförmige Sektor des Deckels (17) eine größere kugelförmige Oberfläche (19) bilden, und der kleinere Sektor des Bodens (13) und der kleinere kugelförmige Sektor des Deckels (18) eine kleinere kugelförmige Oberfläche (20) bilden, welche im Durchmesser kleiner als die größere kugelförmige Oberfläche (19) ist, in der sie aufgenommen ist, um ein Kugelgelenk zu bilden.

2. Gelenkiger Kanal zur Aufnahme von unterirdischen Leitungen nach Anspruch 1, **dadurch gekennzeichnet, dass** die Grundfläche (4) Kerben in Längsrichtung (6) besitzt, welche dazu ausgelegt sind, vertikale Abtrennungen (7) zu halten, und dass die Seitenwände (5) einen Absatz (8) besitzen, der dazu ausgelegt ist, eine horizontale Abtrennung (9) zu halten.

3. Gelenkiger Kanal zur Aufnahme von unterirdischen Leitungen nach Anspruch 1, **dadurch gekennzeichnet, dass** das Modul (1) mit Rückhaltemechanismen ausgestattet ist, die dazu ausgelegt sind, den Deckel (3) mit dem Boden (2) verbunden zu halten, welche aus einer Vielzahl von Bolzen (16) im Deckel (3) gebildet werden, die dazu ausgelegt sind, in die entsprechenden vertikalen Kerben (15) eingesetzt und darin zurückgehalten zu werden, über welche der Boden (2) in seinen Seitenwänden (5) verfügt.

## Revendications

1. Conduite articulée pour le logement de conducteurs souterrains du type de celles formées par une pluralité de modules similaires (1) couplés ensemble, **caractérisée en ce que** chaque module (1) comprend une base (2) à section transversale en forme de «U», définie par un fond (4) et eux parois latérales (5), et une couverture (3) qui forment un corps central (11) creux, fermé conçu pour porter des conducteurs souterrains, avec la base (2) ayant un secteur sphérique plus grand de la base (12) et un secteur sphérique plus petit de la base (13) à chaque extrémité, et la couverture (3) un secteur sphérique plus grand de la couverture (17) et un secteur sphérique plus petit de la couverture (18) à chaque extrémité pour que lorsque la base (2) et la couverture (3) sont assemblées le secteur sphérique plus grand de la base et le secteur sphérique plus grand de la couverture (17) forment une surface sphérique plus grande (19) et le secteur plus petit de la base (13) et le secteur sphérique plus petit de la couverture (18) forment une surface sphérique plus petite (20) plus petite en diamètre que la surface sphérique plus grande (19) dans laquelle elle est logée pour former une articulation à rotule.

2. Conduite articulée pour le logement de conducteurs souterrains, telle qu'elle est revendiquée dans la revendication 1, **caractérisée en ce que** le fond (4) possède des rainures longitudinales (6) conçues pour porter des partitions verticales (7), et **en ce que** les parois latérales (5) possèdent une marche (8) conçue pour porter une partition horizontale (9)

3. Conduite articulée pour le logement de conducteurs souterrains, telle qu'elle est revendiquée dans la revendication 1, **caractérisée en ce que** le module (1) est équipé d'un mécanisme de rétention conçu pour maintenir la couverture (3) fixée à la base (2), constituée d'une pluralité de goujons (16) dans la couverture (3) conçus pour être insérés et rester retenus dans les rainures verticales correspondantes (15) que la base (2) possède dans ses parois latérales (5).
